# FASCICULE DE BREVET EUROPEEN

(11) **EP 2 002 571 B1**
(45) Date de publication et mention de la délivrance du brevet: **18.04.2012**
(21) Numéro de dépôt: 07731101.7
(22) Date de dépôt: 06.03.2007
(51) Int. Cl.: H04B 10/10, H04B 3/54, H05B 33/00

(54) **DISPOSITIF D'EMISSION ELECTROLUMINESCENT POUR LA TRANSMISSION OPTIQUE EN ESPACE LIBRE**
ELEKTROLUMINESZENZ-EMISSIONSANORDNUNG ZUR OPTISCHEN ÜBERTRAGUNG IM FREIRAUM
ELECTROLUMINESCENT EMISSION DEVICE FOR OPTICAL TRANSMISSION IN FREE SPACE

(30) Priorité: 06.03.2006 FR 0601952
(43) Date de publication de la demande: 17.12.2008
(73) Titulaire: ZXTALK ASSETS, LLC, Wilmington DE 19808 (US)
(72) Inventeur: BROYDE, Frederic, F-78580 Maul (FR); CLAVELIER, Evelyne, F-78580 Maule (FR)
(74) Mandataire: Small, Gary James
(86) Numéro de dépôt international: PCT/FR2007/000403
(87) Numéro de publication internationale: WO 2007/101942

(56) Documents cités:
- EP-A1- 1 564 914
- WO-A-00/40892
- FR-A1- 2 848 375
- US-A- 5 278 536
- US-A1- 2002 167 701
- KOMINE T ET AL: "Integrated system of white led visible-light communication and power-line communication" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 4, 15 septembre 2002 (2002-09-15), pages 1762-1766, XP010611569 ISBN: 0-7803-7589-0

## Description

### DOMAINE TECHNIQUE DE L'INVENTION

L'invention concerne un dispositif d'émission pour la transmission à travers l'espace, utilisant des ondes électromagnétiques du domaine infrarouge et/ou du domaine visible et/ou du domaine ultraviolet produites par une ou plusieurs diodes électroluminescentes.

### ÉTAT DE LA TECHNIQUE ANTÉRIEURE

Dans la suite, le terme "lumière" désignera un rayonnement électromagnétique pouvant comporter de la lumière visible et/ou de la lumière infrarouge et/ou de la lumière ultraviolette. Dans la suite, le terme "diode électroluminescente" désignera une diode électroluminescente de type quelconque. Cette diode électroluminescente peut par exemple être une diode électroluminescente infra-rouge, une diode électroluminescente blanche de forte puissance incorporant un matériau phosphorescent, une diode électroluminescente organique, etc.

Un dispositif d'émission pour la transmission optique en espace libre, comportant une ou plusieurs lampes à décharge utilisées comme source de lumière pour la transmission et un ensemble de réception pour les transmissions par lignes de réseau de distribution d'énergie, est décrit dans la demande de brevet français numéro 04 09939, intitulée *Dispositif d'émission pour la transmission optique en espace libre,* et dans la demande PCT/IB2005/003309 intitulée *Transmitting device for free-space optical transmission.* Un des avantages de ces dispositifs connus est que la lumière produite peut aussi être utilisée pour l'éclairage qu'elle procure. Dans ce cas, la fonction de transmission optique en espace libre peut être ajoutée à la fonction d'éclairage avec un coût très faible. On note que, si des luminaires utilisant des diodes électroluminescentes ont été choisis pour l'éclairage, cet avantage de l'utilisation de ces dispositifs connus disparaît.

Il faut aussi noter qu'il est difficile de moduler dans une bande de fréquences de modulation plus large que 10 kHz la lumière produite par une lampe à décharge, alors qu'il est facile de moduler dans une large bande la lumière produite par une diode électroluminescente. Cette modulation de la lumière produite par des diodes électroluminescentes peut être obtenue avec plusieurs méthodes, qui permettent de faire parvenir aux différentes diodes électroluminescentes un "courant de diode" convenablement modulé, produit par un "dispositif de commande", le courant de diode circulant toujours dans le même sens.

Des dispositifs d'éclairage ayant une fonction de communication et comportant des diodes électroluminescentes sont décrits dans le brevet des Etats-Unis d'Amérique numéro 6,956,338, intitulé *Analog control of light sources,* et dans la demande de brevet français numéro 02 15359, intitulée *Dispositif d'éclairage à diodes électroluminescentes comportant un dispositif de communication et installation comportant un tel dispositif.*

En particulier lorsque le courant de diode comporte des composantes à haute fréquence, il est clair pour le spécialiste qu'il est souhaitable que le câblage entre le dispositif de commande et la ou les diodes électroluminescentes soit aussi court que possible. Les avantages obtenus en maintenant ce câblage court concernent par exemple la compatibilité électromagnétique, la sécurité électrique, ou le rendement de l'ensemble de l'installation. En pratique, un câblage court entre le ou les dispositifs de commande et la ou les diodes électroluminescentes va impliquer que chaque luminaire contenant une ou plusieurs diodes électroluminescentes comporte son propre dispositif de commande, ce qui implique, selon les techniques connues, que deux câblages distincts soient utilisés, l'un pour fournir l'alimentation électrique à chaque luminaire, par exemple en le connectant à un réseau de distribution d'énergie en courant alternatif, et l'autre pour fournir les signaux à transmettre par chaque luminaire.

Selon les procédés et dispositifs connus, la question du moyen de faire parvenir les signaux à transmettre jusqu'aux diodes électroluminescentes n'est pas abordée de façon satisfaisante pour toutes les applications, car l'emploi de deux câblages distincts est évidemment plus coûteux qu'un câblage classique pour des luminaires uniquement destinés à l'éclairage. Pour n'utiliser qu'un seul câblage, il pourrait être envisagé de faire parvenir à chaque luminaire les signaux à transmettre en utilisant une liaison par radio, mais cette solution supprime le principal intérêt des transmissions optiques en espace libre, qui est de ne pas utiliser le spectre radioélectrique.

Un dispositif d'illumination avec plusieurs diodes électroluminescentes est décrit dans la demande de brevet EP 1 564 914 A1. L'intensité de la lumière est modulée en fonction d'un signal modulé comportant des données. Ce signal est superposé à un signal de courant alternatif d'une ligne électrique.

Des dispositifs similaires sont connus par le document « Integrated system of white LED visible-light communication and power-line communication », T. Komine et M. Nakagawa, 13th international IEEE symposium, 15 septembre 2002, ISBN 0-7803-7589-0, la demande de brevet WO 00/40892 A1 et la demande de brevet US 2002/0167701 A1.

Le brevet US 5,278,536 A concerne un dispositif d'illumination avec plusieurs tubes luminescents combinés avec plusieurs diodes électroluminescentes infrarouge.

### EXPOSÉ DE L'INVENTION

L'invention a pour objet un dispositif d'émission pour la transmission optique en espace libre ne nécessitant pas de câblage distinct pour lui faire parvenir les signaux d'entrée, dépourvu des inconvénients des procédés et dispositifs connus.

L'invention concerne un dispositif d'émission pour la transmission optique en espace libre selon revendication 1.

Les spécialistes comprennent qu'à une distance du dispositif selon l'invention suffisamment grande devant la plus grande dimension du dispositif selon l'invention, il est possible de mesurer l'intensité énergétique de la lumière produite par les diodes électroluminescentes, dans chaque direction. Un dispositif selon l'invention peut être tel que la lumière émise par toutes les diodes électroluminescentes utilisées comme source de lumière pour la transmission optique ne produit, dans aucun angle solide de moins 0,005 stéradian, un flux énergétique de plus de 50 % du flux énergétique total produit par les diodes électroluminescentes utilisées comme source de lumière pour la transmission optique. Lorsque cette condition est remplie, ce flux énergétique total ne peut être concentré en un pinceau très étroit, et la lumière modulée correspondante est donc rayonnée avec une faible directivité par le dispositif selon l'invention. Par exemple, avec un laser, plus de 50 % du flux énergétique total est habituellement compris dans un pinceau qui, à distance suffisante, correspond à un cône de révolution dont l'angle au sommet est inférieur à 2 milliradians, soit un angle solide inférieur à environ 3.10⁻⁶ stéradian. Selon l'invention, lorsque ladite condition est remplie, la lumière produite par les diodes électroluminescentes doit donc être émise dans un angle solide beaucoup plus grand que l'angle solide des lasers typiquement utilisés dans les dispositifs disponibles dans le commerce pour les transmissions optiques en espace libre entre immeubles. Cette caractéristique rend inutile un alignement précis entre un dispositif selon l'invention et un récepteur de transmission optique, qui peut donc être mobile. Par contre, l'utilisation d'un angle solide d'émission relativement important (c'est-à-dire une faible directivité) conduit à une portée de transmission relativement plus faible.

Par conséquent, un dispositif selon l'invention peut être tel qu'il est prévu pour être installé à l'intérieur d'un immeuble, ou à l'intérieur d'un véhicule. En effet, un dispositif selon l'invention satisfaisant la condition définie ci-dessus est par exemple adapté à la transmission vers des récepteurs de transmission optique portés par des personnes se déplaçant à l'intérieur d'un immeuble ou d'un véhicule.

L'ensemble de réception pour les transmissions par lignes de réseau de distribution d'énergie exploite les signaux apparaissant aux bornes d'alimentation du dispositif d'émission selon l'invention. Ce réseau de distribution d'énergie peut être quelconque, par exemple être un réseau en courant continu, un réseau en courant alternatif relié au réseau public basse tension, un réseau en courant alternatif à bord d'un navire, etc.

L'ensemble de réception pour les transmissions par lignes de réseau de distribution d'énergie est la partie réceptrice d'un système de transmission par lignes de réseau de distribution d'énergie, qui peut aussi être appelé "système de télécommunication par courants porteurs" en français et "power-line communication" ou "PLC" en anglais. Les caractéristiques et modes de réalisation d'un tel système sont bien connus des spécialistes, certains aspects étant présentés dans l'article de N. Pavlidou, A.J. Han Vinck, J. Yazdani et B. Honary intitulé "Power Line Communication: State of the Art and Future Trends" parus dans la revue IEEE Communications Magazine, Vol. 41, No. 4, April 2003, pages 34 à 40. Notamment, il faut remarquer que selon la réglementation de l'Union Européenne, les fréquences allouées à certaines transmissions par lignes de réseau de distribution d'énergie sont supérieures à 3 kHz. Selon l'invention, l'ensemble de réception pour les transmissions par lignes de réseau de distribution d'énergie peut donc obtenir les "signaux démodulés" par la démodulation de signaux de fréquences supérieures à 3 kHz apparaissant sur les bornes permettant d'alimenter le dit dispositif d'émission.

Les signaux transmis par le système de transmission par lignes de réseau de distribution d'énergie peuvent être des signaux numériques ou des signaux analogiques, modulés par un procédé quelconque, lui-même numérique ou analogique.

L'article de E. Biglieri intitulé "Coding and Modulation for a Horrible Channel" paru dans la revue IEEE Communications Magazine, Vol. 41, No. 5, May 2003, aux pages 92 à 98, nous enseigne que, pour les transmissions par lignes de réseau de distribution d'énergie, la modulation d'une seule porteuse n'est souvent pas une bonne solution technique. Par conséquent, un dispositif selon l'invention peut être caractérisé en ce que le dit ensemble de réception pour la transmission par lignes de réseau de distribution d'énergie utilise un procédé de modulation à plusieurs porteuses ou à étalement de spectre. Par exemple, une modulation à plusieurs porteuses, comme dans le procédé de multiplexage de fréquences orthogonales (aussi appelé OFDM), peut donner de bons résultants.

Le courant de diode peut être modulé de diverses façons bien connues des spécialistes. Selon l'invention, il est par exemple possible d'utiliser une modulation optique tout-ou-rien (modulation OOK) pour moduler la lumière. Par exemple, pour transmettre un signal analogique, il est possible d'utiliser une modulation d'impulsion en fréquence (modulation PFM) du courant de diode, pour obtenir une modulation optique tout-ou-rien. Par exemple, pour transmettre des informations numériques, il est possible d'utiliser un courant de diode en bande de base en mode binaire CMI (coded mark inversion), pour obtenir une modulation optique tout-ou-rien. Par exemple, pour transmettre des informations numériques, il est possible d'utiliser une modulation d'impulsion en position (modulation PPM) du courant de diode, pour obtenir une modulation optique tout-ou-rien.

Selon l'invention, il est par exemple possible d'utiliser un courant circulant toujours dans le même sens, constitué d'un courant continu auquel un courant variable à moyenne nulle est superposé, pour obtenir une modulation optique d'intensité (modulation IM) pour moduler la lumière. Par exemple, pour transmettre des informations numériques, le courant variable à moyenne nulle peut être un courant en bande de base en mode biphasé (aussi appelé code Manchester) ou en mode à haute densité HDB3, bien connus des spécialistes, pour obtenir une modulation optique d'intensité. Par exemple, le courant variable à moyenne nulle peut être une sous-porteuse modulée d'une façon quelconque par des informations analogiques ou numériques à transmettre, pour obtenir une modulation optique d'intensité. La sous-porteuse peut être modulée par un procédé quelconque faisant varier sa phase ou sa fréquence, par exemple une modulation par déplacement de fréquence FSK pour un signal numérique. La sous-porteuse peut aussi être modulée par un procédé quelconque faisant varier son amplitude. Il est également possible d'utiliser plusieurs sous-porteuses.

Il est clair pour le spécialiste que, pour obtenir une modulation optique d'intensité, les divers types de modulation du courant de diode peuvent par exemple être obtenus en faisant varier le rapport cyclique d'un dispositif de commande à découpage.

En général, il est souhaitable que la modulation de la lumière ne soit pas perceptible par les observateurs humains. Ce résultat peut être obtenu lorsque les diodes électroluminescentes utilisées comme source de lumière pour la transmission optique produisent une lumière invisible pour les observateurs humains. Un dispositifselon l'invention peut donc être caractérisé en ce que les diodes électroluminescentes utilisées comme source de lumière pour la transmission produisent une lumière invisible pour les observateurs humains, par exemple de la lumière infra-rouge. Dans un tel dispositif selon l'invention, il est possible que de la lumière visible soit produite par au moins une source de lumière qui n'est pas utilisée pour la transmission optique, par exemple par une ou plusieurs lampes à décharge ou par des diodes électroluminescentes blanches qui ne sont pas utilisées pour la transmission. Un tel dispositif selon l'invention peut être caractérisé en ce que la lumière visible produite est aussi utilisée pour l'éclairage qu'elle procure.

Une modulation de la lumière imperceptible par les observateurs humains peut aussi être obtenu lorsque les diodes électroluminescentes utilisées comme source de lumière pour la transmission optique produisent une lumière visible, grâce au phénomène de persistance rétinienne, qui élimine la sensation de papillotement pour les variations lumineuses suffisamment rapides. Un dispositif selon l'invention peut donc être caractérisé en ce que les variations du flux lumineux correspondant à la modulation de la lumière ne contiennent pratiquement pas de composante à des fréquences inférieures à 24 Hz. Pour certaines modulations, cette limite de 24 Hz pourra être suffisante pour qu'il n'y ait pas perception de la présence d'une modulation par un observateur humain. Pour certaines modulations, il pourra être utile de prévoir une limite plus élevée, par exemple 200 Hz. Par exemple, cette caractéristique peut être facilement obtenue avec une modulation optique OOK et un courant de diode en mode CMI, ou avec une modulation optique IM et un courant de diode présentant une partie variable utilisant le code Manchester. Un tel dispositif selon l'invention peut être caractérisé en ce que la lumière produite est aussi utilisée pour l'éclairage qu'elle procure.

Un dispositif selon l'invention produisant une lumière appropriée pour l'éclairage pourra être conçu de façon à ressembler à un luminaire ordinaire. Par conséquent, un dispositif selon l'invention peut être caractérisé en ce que sa fonction de transmission optique en espace libre est secrète, sa fonction apparente étant l'éclairage.

### EXPOSÉ DÉTAILLÉ D'UN MODE DE RÉALISATION

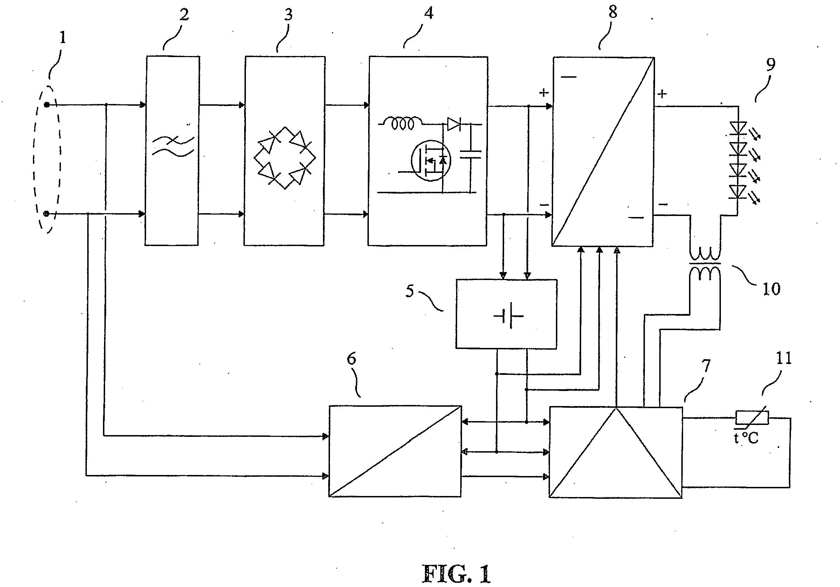

D'autres caractéristiques de l'invention ressortiront plus clairement de l'exemple suivant, donné à titre non limitatif et représenté sur la figure 1. Ce dispositif est électriquement relié par ses bornes d'entrée (1) à un réseau de distribution d'énergie en courant alternatif. Un filtre secteur (2) permet de réduire fortement les perturbations électromagnétiques conduites produites aux fréquences supérieures à 150 kHz par les circuits de puissance, conformément à la réglementation en matière de compatibilité électromagnétique. Les circuits de puissance comportent un redresseur (3), un circuit de correction de facteur de puissance (4), une alimentation auxiliaire (5) et un convertisseur continu/continu (8). Le circuit de correction de facteur de puissance (4) bien connu des spécialistes est constitué d'un hacheur élévateur non isolé, et permet d'obtenir une absorption sinusoïdale de courant, donc une faible émission de courant harmonique conformément à la réglementation en matière de compatibilité électromagnétique, et une prérégulation. Le convertisseur continu/continu (8) comporte une alimentation flyback. La sortie du convertisseur continu/continu (8) est reliée à plusieurs diodes électroluminescentes de forte puissance connectées en série (9), ces diodes étant connectées en série avec le secondaire d'un transformateur de modulation (10). La sortie du convertisseur continu/continu (8) est régulée en courant, et présente donc une impédance dynamique élevée aux fréquences inférieures à 1 Hz. La sortie du convertisseur continu/continu (8) présente une impédance dynamique faible aux fréquences supérieures ou égales à 1000 Hz, du fait de son condensateur de filtrage de sortie. Le primaire du transformateur de modulation (10) reçoit un courant de modulation, fourni par le circuit de contrôle (7) en utilisant un étage de sortie en classe D. Le courant de modulation est obtenu par modulation à déplacement minimum MSK d'une sous-porteuse à 375 kHz, avec un signal numérique à 500 kbit/s, une telle modulation ayant une densité spectrale de puissance moyenne nulle à la fréquence 0 Hz. Ainsi, les diodes électroluminescentes (9) reçoivent un courant continu fourni par le convertisseur continu/continu (8), ce courant continu étant superposé à un courant à moyenne nulle provenant du secondaire du transformateur de modulation (10). Un ensemble de réception pour les transmissions par lignes de réseau de distribution d'énergie (6) fournit à sa sortie des signaux démodulés obtenus par démodulation de signaux de fréquences supérieures à 3 kHz apparaissant sur les deux bornes d'entrée (1). Ces signaux démodulés sont appliqués à l'entrée du circuit de contrôle (7) qui fournit à une première sortie la consigne de courant du convertisseur continu/continu (8) et à une seconde sortie le courant de modulation appliqué au primaire du transformateur de modulation (10). Les signaux en sortie du circuit de contrôle (7) dépendent de la température mesurée par un capteur de température (11) et des signaux démodulés, de façon à ce que la lumière produite par les diodes électroluminescentes (9) soit convenablement modulée et à ce que le courant moyen traversant les diodes électroluminescentes ait une valeur adaptée à leur température. Le circuit de contrôle (7), le convertisseur continu/continu (8), le transformateur de modulation (10) et le capteur de température (11) constituent un dispositif de commande à découpage qui module le courant de diode, en fonction des signaux démodulés, de façon à ce que la lumière produite soit aussi modulée en fonction des signaux démodulés, avec peu de pertes grâce à l'utilisation d'une alimentation flyback et d'un étage de sortie en classe D. L'alimentation auxiliaire (5) alimente l'ensemble de réception pour les transmissions par lignes de réseau de distribution d'énergie (6), le circuit de contrôle (7) et le convertisseur continu/continu (8).

Nous notons que le circuit de contrôle (7) pourrait également être relié à un capteur d'intensité lumineuse, comportant par exemple une photodiode, de façon à ce que les signaux fournis par le circuit de contrôle dépendent du flux énergétique produit par les diodes électroluminescentes, car le vieillissement des diodes électroluminescentes de forte puissance cause souvent une diminution du flux lumineux. Nous notons aussi qu'il serait théoriquement possible d'obtenir une modulation du courant de diode en faisant varier la consigne de courant du convertisseur continu/continu (8), ce qui permettrait de supprimer le transformateur de modulation (10) et la seconde sortie du circuit de contrôle (7). En fait, cette solution pourrait convenir pour une modulation lente, mais, pour la modulation envisagée dans cet exemple, cette solution n'est en pratique pas compatible avec de faibles pertes.

Sur la figure 1 n'apparaissent ni connexion à un conducteur de protection électrique au niveau des bornes d'entrée (1), ni connexion de masse ou de terre. De telles connexions peuvent évidemment être présentes, par exemple pour la sécurité électrique et/ou pour la compatibilité électromagnétique.

La modulation de la lumière produit une densité spectrale de puissance moyenne très faible aux fréquences inférieures à 10 kHz et n'est donc pas perceptible. Nous notons aussi que, si les diodes électroluminescentes (9) sont des diodes blanches, le procédé de modulation choisi évite le phénomène de changement des couleurs décrit dans la demande de brevet français numéro 02 15359 mentionnée ci-dessus.

Le dispositif selon l'exemple représenté sur la figure 1 est réalisé de façon à ressembler à un luminaire courant, uniquement destiné à l'éclairage. Les signaux démodulés peuvent aussi être utilisés pour d'autres fonctions que la modulation de la lumière, par exemple des fonctions liées à la fonction d'éclairage, par exemple la mise en service ou hors service de l'éclairage, ou la variation de l'intensité de la lumière visible produite (fonction de gradation).

### INDICATIONS SUR LES APPLICATIONS INDUSTRIELLES

Grâce à un dispositif selon l'invention, des signaux envoyés par l'émetteur d'un système de transmission par lignes de réseau de distribution d'énergie sont transformés en signaux lumineux pouvant être reçus par un récepteur de transmission optique approprié. Cette transmission optique permet une transmission sans fil et sans radio. Les signaux optiques ainsi transmis peuvent correspondre à de la voix, des données, etc. Ces signaux optiques peuvent aussi comprendre d'autres informations d'origine interne au dispositif selon l'invention, par exemple relatives à l'état d'usure des diodes électroluminescentes, qui peut se déduire de certaines grandeurs électriques du dispositif de commande, ou d'une mesure de l'intensité de la lumière produite, comme le savent les spécialistes.

Un dispositif selon l'invention peut être tel que l'émission de la lumière modulée pour la transmission d'un ensemble de données se produise à un moment bien déterminé, par exemple en utilisant une synchronisation par rapport à des signaux transmis par le réseau de distribution d'énergie. De cette façon, une pluralité de dispositifs selon l'invention pourront produire chacun une lumière modulée, ces modulations étant identiques et en phase. Ceci renforcera donc le signal reçu par un récepteur de transmission optique qui recevrait de la lumière produite par plusieurs de ces dispositifs selon l'invention.

Il est également possible que différents dispositifs selon l'invention connectés aux mêmes lignes de réseau de distribution d'énergie émettent des signaux optiques différents, en utilisant un procédé d'adressage bien connu des spécialistes.

Le dispositif selon l'invention pour la transmission optique en espace libre est particulièrement adapté à la diffusion d'informations à l'intérieur des locaux et des véhicules, totalement protégée des perturbations et interférences électromagnétiques radiofréquences d'origine externe. De multiples applications sont possibles, par exemple l'application à des transmissions de données sur les prix dans des locaux de grande distribution.

Le dispositif selon l'invention peut notamment être appliqué à un système de transmission d'urgence dans les bâtiments, car dans un contexte de sinistre de grande ampleur ou de catastrophe, les capacités de transmission radio sont souvent saturées ou très perturbées. Pour cette application, un dispositif selon l'invention pourrait aussi avoir une fonction d'éclairage de sécurité.

Le dispositif selon l'invention peut notamment être appliqué à un système de transmission dans un véhicule, ne produisant pas de perturbations électromagnétiques radiofréquence.

Le dispositif selon l'invention peut notamment être appliqué à un système de transmission dans un milieu transparent mais suffisamment conducteur pour limiter les possibilités des communications par radio, par exemple l'eau de mer.

Le dispositif selon l'invention peut notamment être appliqué à un système de transmission dans des lieux où des perturbations électromagnétiques intenses limitent les possibilités des communications par radio.

N'utilisant pas de transmission radio susceptible d'être captée à distance, le dispositif selon l'invention est particulièrement adapté aux transmissions secrètes, spécialement lorsque la lumière produite n'est pas susceptible d'atteindre un dispositif de réception optique auquel elle n'est pas destinée.

## Revendications

1. Dispositif d'émission pour la transmission optique en espace libre, comportant:
- une ou plusieurs diodes électroluminescentes (9) utilisées comme source de lumière pour la transmission optique;
- un ensemble de réception (6) pour les transmissions par lignes de réseau de distribution d'énergie, capable de fournir à sa sortie des "signaux démodulés" obtenus par démodulation de signaux apparaissant sur les bornes permettant d'alimenter ledit dispositif d'émission;
- un dispositif de commande (7) comprenant une première sortie pour moduler la lumière produite par les diodes électroluminescentes (9) utilisées comme source de lumière pour la transmission optique, en fonction des "signaux démodulés",
**caractérisé en ce que** le dispositif de commande (7) comprend une deuxième sortie capable de fournir une consigne de courant d'un convertisseur continu/continu (8) dont sa sortie est reliée aux diodes électroluminescentes (9).

2. Dispositif selon la revendication 1, dans lequel la lumière émise par toutes les diodes électroluminescentes (9) utilisées comme source de lumière pour la transmission optique ne produit, dans aucun angle solide de moins 0,005 stéradian, un flux énergétique de plus de 50 % du flux énergétique total produit par les diodes électroluminescentes (9) utilisées comme source de lumière pour la transmission optique.

3. Dispositif selon l'une quelconque des revendications précédentes, dans lequel le dit ensemble de réception pour la transmission par lignes de réseau de distribution d'énergie utilise un procédé de modulation à plusieurs porteuses ou à étalement de spectre.

4. Dispositif selon l'une quelconque des revendications précédentes, dans lequel une modulation optique tout-ou-rien est utilisée pour moduler la lumière

5. Dispositif selon l'une quelconque des revendications précédentes, dans lequel une modulation optique d'intensité est utilisée pour moduler la lumière

6. Dispositif selon l'une quelconque des revendications précédentes, dans lequel les diodes électroluminescentes (9) utilisées comme source de lumière pour la transmission optique produisent une lumière invisible pour les observateurs humains.

7. Dispositif selon l'une quelconque des revendications précédentes, dans lequel de la lumière visible est produite par au moins une source de lumière qui n'est pas utilisée pour la transmission optique.

8. Dispositif selon l'une quelconque des revendications précédentes, dans lequel les diodes électroluminescentes (9) utilisées comme source de lumière pour la transmission optique produisent une lumière visible, la modulation de la lumière étant imperceptible par les observateurs humains.

9. Dispositif selon l'une quelconque des revendications précédentes, dans lequel la lumière visible produite est aussi utilisée pour l'éclairage qu'elle procure.

10. Dispositif selon l'une quelconque des revendications précédentes, dans lequel la fonction de transmission optique en espace libre est secrète, sa fonction apparente étant l'éclairage.

## Claims

1. Emitting device for free-space optical transmission, comprising:
- one or more light-emitting diodes (9) used as a light source for the optical transmission;
- a receiving assembly (6) for power-line transmissions, capable of delivering to its output "demodulated signals" obtained by demodulating signals appearing on the terminals for supplying power to said emitting device; and
- a control device (7) comprising a first output for modulating the light produced by the light-emitting diodes (9) employed as a light source for the optical transmission, as a function of the "demodulated signals",
**characterized in that** the control device (7) comprises a second output capable of delivering a current setpoint to a DC/DC converter (8) the output of which is connected to the light-emitting diodes (9).

2. Device according to Claim 1, in which the light emitted by all the light-emitting diodes (9) employed as a light source for the optical transmission does not, in any solid angle of less than 0.005 steradian, produce an energy flux of more than 50% of the total energy flux produced by the light-emitting diodes (9) employed as a light source for the optical transmission.

3. Device according to any one of the preceding claims, in which said receiving assembly for power-line transmission employs a modulation method that makes use of a number of carriers or a spectrum spread.

4. Device according to any one of the preceding claims, in which on-off keying modulation is used to modulate the light.

5. Device according to any one of the preceding claims, in which optical intensity modulation is used to modulate the light.

6. Device according to any one of the preceding claims, in which the light-emitting diodes (9), employed as a light source for the optical transmission, produce light that is invisible to human observers.

7. Device according to any one of the preceding claims, in which visible light is produced by at least one light source that is not used for the optical transmission.

8. Device according to any one of the preceding claims, in which the light-emitting diodes (9) employed as a light source for the optical transmission produce visible light, the modulation of the light being imperceptible to human observers.

9. Device according to any one of the preceding claims, in which the visible light produced is also employed to provide illumination.

10. Device according to any one of the preceding claims, in which the free-space optical transmission function is secret, the apparent function of the device being illumination.

## Patentansprüche

1. Emissionsvorrichtung zur optischen Freiraumübertragung, die aufweist:
- eine oder mehrere Elektrolumineszenzdioden (9), die als Lichtquelle für die optische Übertragung verwendet werden;
- eine Empfangseinheit (6) für die Übertragungen über Energieverteilungsnetzleitungen, die an ihrem Ausgang "demodulierte Signale" liefern kann, die durch Demodulation von an den Klemmen auftretenden Signalen erhalten werden, die die Versorgung der Sendevorrichtung erlauben;
- eine Steuervorrichtung (7), die einen ersten Ausgang zum Modulieren des von den als Lichtquelle für die optische Übertragung verwendeten Elektrolumineszenzdioden (9) erzeugten Lichts abhängig von den "demodulierten Signalen" enthält,
**dadurch gekennzeichnet, dass** die Steuervorrichtung (7) einen zweiten Ausgang enthält, der einen Stromsollwert eines Gleichstrom/Gleichstrom-Wandlers (8) liefern kann, dessen Ausgang mit den Elektrolumineszenzdioden (9) verbunden ist.

2. Vorrichtung nach Anspruch 1, bei der das von allen als Lichtquelle für die optische Übertragung verwendeten Elektrolumineszenzdioden (9) emittierte Licht in keinem Raumwinkel von weniger als 0,005 Steradiant einen Energiefluss von mehr als 50 % des Gesamtenergieflusses erzeugt, der von den als Lichtquelle für die optische Übertragung verwendeten Elektrolumineszenzdioden (9) erzeugt wird.

3. Vorrichtung nach einem der vorhergehenden Ansprüche, bei der die Empfangseinheit für die Übertragung über Energieverteilungsnetzleitungen ein Modulationsverfahren mit mehreren Trägerwellen oder mit Spreizspektrum verwendet.

4. Vorrichtung nach einem der vorhergehenden Ansprüche, bei der eine optische Ein-Aus-Modulation zum Modulieren des Lichts verwendet wird.

5. Vorrichtung nach einem der vorhergehenden Ansprüche, bei der eine optische Intensitätsmodulation zum Modulieren des Lichts verwendet wird.

6. Vorrichtung nach einem der vorhergehenden Ansprüche, bei der die als Lichtquelle für die optische Übertragung verwendeten Elektrolumineszenzdioden (9) ein für die menschlichen Beobachter unsichtbares Licht erzeugen.

7. Vorrichtung nach einem der vorhergehenden Ansprüche, bei der sichtbares Licht von mindestens einer Lichtquelle erzeugt wird, die nicht für die optische Übertragung verwendet wird.

8. Vorrichtung nach einem der vorhergehenden Ansprüche, bei der die als Lichtquelle für die optische Übertragung verwendeten Elektrolumineszenzdioden (9) ein sichtbares Licht erzeugen, wobei die Modulation des Lichts für die menschlichen Beobachter nicht wahrnehmbar ist.

9. Vorrichtung nach einem der vorhergehenden Ansprüche, bei der das erzeugte sichtbare Licht auch für die Beleuchtung verwendet wird, die es liefert.

10. Vorrichtung nach einem der vorhergehenden Ansprüche, bei der die Funktion der optischen Freiraumübertragung geheim ist, während ihre sichtbare Funktion die Beleuchtung ist.
